# EUROPEAN PATENT APPLICATION

(11) **EP 4 342 819 A1**
(43) Date of publication of application: **27.03.2024**
(21) Application number: 22885615.9
(22) Date of filing: 09.10.2022
(51) Int. Cl.: B65G 1/04, B65G 1/137, G06Q 10/08

(54) **WAREHOUSING SYSTEM AND METHOD**

(30) Priority: 26.10.2021 CN 202111250979; 26.10.2021 CN 202122589191 U
(71) Applicant: Beijing Geekplus Technology Co., Ltd., Chaoyang District Beijing 100102 (CN)
(72) Inventor: WANG, Xu, Beijing 100102 (CN)
(74) Representative: Manna, Sara
(86) International application number: PCT/CN2022/124013
(87) International publication number: WO 2023/071734

(57) **Abstract**

Provided in the present disclosure are a warehousing system and method. The warehousing system comprises: a workstation, which comprises at least one picking station and at least one distributing station, the picking station and the distributing station being used for processing a container; a movable carrier stop area, which is used for stopping a conveyance apparatus for bearing a movable carrier and is equipped with a container handling apparatus; the conveyance apparatus, which is responsible for conveying the movable carrier to the movable carrier stop area and is used for bearing the container; and the container handling apparatus, which is responsible for moving the container between the workstation and the movable carrier. Both the picking station and the distributing station are arranged at the workstation, so that the moving distance of an operator or an automatic apparatus from the picking station to the distributing station can be reduced, so as to effectively improve the picking efficiency.

## Description

### CROSS-REFERENCE TO RELATED APPLICATIONS

This application claims priority to Chinese Patent Application No. 202111250979.4 filed to the Patent Office of the People's Republic of China on October 26, 2021, titled "WAREHOUSING SYSTEM AND METHOD", and Chinese Patent Application No. 202122589191.8 filed to the Patent Office of the People's Republic of China on October 26, 2021, titled "WAREHOUSING SYSTEM", which are incorporated herein by reference in their entirety.

### TECHNICAL FIELD

The present disclosure relates to the technical field of communication, and particularly relates to a warehousing system and method.

### BACKGROUND

Most of the sorting operations in the prior art are completed by robots in collaboration with operators. Although robots can reduce the workload of operators, after sorting materials at workstation, operators still need to transport the materials to a put wall. The put wall is usually located far away from the workstation, which requires operators to drive target materials from the workstation to the put wall for distribution, and then walk back to the goods shelf to continue sorting subsequent items after distribution. This process also requires operators to personally handle the distribution process, which not only fails to ensure the speed of distribution processing, but also affects the sorting efficiency. Therefore, an effective solution is urgently needed to solve the above problem.

### SUMMARY

In view of this, an embodiment of the present disclosure provides a warehousing system to solve the technical defect in the prior art. This embodiment of the present disclosure also provides another warehousing system and a sorting method.

According to a first aspect, an embodiment of the present disclosure provides a warehousing system, including: a workstation including at least one sorting station and at least one distribution station, the sorting station and the distribution station being configured to process a container; a movable carrier parking area configured to park a handling device bearing a movable carrier and provided with a container loading and unloading device; the handling device responsible for transporting the movable carrier to the movable carrier parking area, the movable carrier being configured to bear the container; and the container loading and unloading device responsible for moving the container between the workstation and the movable carrier.

Optionally, the movable carrier includes at least one goods position, and the goods position is configured to store the container; and the container is a sorting container or an order container.

Optionally, the movable carrier parking area includes at least one movable carrier parking sub-area, and one container loading and unloading device corresponds to the at least one movable carrier parking sub-area.

Optionally, the workstation includes a guidance device, and the guidance device is configured to display information for guiding an operator or an automatic device.

Optionally, the workstation includes a temporary storage position, and the temporary storage position is configured to temporarily store the sorting container or the order container.

Optionally, a substitution relationship is established between a target sorting container and a target order container; in a case that items contained in the target sorting container have the same attribute as items to be put into the target order container, the target sorting container is used as the target order container based on the substitution relationship; correspondingly, the sorting station corresponding to the target sorting container is switched to the distribution station.

Optionally, the container loading and unloading device includes a loading and unloading assembly, the loading and unloading assembly is responsible for moving the container between the sorting station/the distribution station and the movable carrier, moving the container between the goods positions of the movable carrier, moving the container between the movable carrier and a target movable carrier, moving the container between the sorting station and a docking port outside the workstation, moving the container between the distribution station and the docking port outside the workstation, or moving the container between the movable carrier and the docking port outside the workstation.

Optionally, the sorting station is adjacent to the distribution station, and the sorting station and the distribution station are docked by at least one operator or automatic device.

According to a second aspect, an embodiment of the present disclosure provides another warehousing system, including a control terminal, at least one workstation, at least one movable carrier parking area, at least one handling device, at least one container loading and unloading device, and at least one movable carrier for storing a container, the workstation including at least one sorting station and at least one distribution station; the control terminal being configured to, in a case that a sorting instruction is received, transmit a handling instruction to the handling device and a loading and unloading instruction to the container loading and unloading device according to the sorting instruction; the handling device being configured to move to the movable carrier based on the handling instruction and to transport the movable carrier to the movable carrier parking area; and the container loading and unloading device being configured to pick and place the container on at least one of the movable carrier, the sorting station, and the distribution station based on the loading and unloading instruction, and move the container between the movable carrier and the sorting station or the distribution station in the workstation.

Optionally, in a case that the loading and unloading instruction is a sorting related loading and unloading instruction, the container loading and unloading device is further configured to determine coordinate information of a target goods position of the container on the movable carrier based on the sorting related loading and unloading instruction, pick and place the container based on the coordinate information of the target goods position, and place the container at the sorting station or the distribution station.

Optionally, the container loading and unloading device is further configured to, in a case that a container placing-back instruction transmitted by the control terminal is received, pick and place the container placed at the sorting station or the distribution station according to the container placing-back instruction, and place the container at the target goods position on the movable carrier.

Optionally, the container loading and unloading device is further configured to pick and place a container to be moved located at a temporary storage position in the workstation, and place the container to be moved at the sorting station, the distribution station, the movable carrier, or a docking port outside the workstation.

Optionally, the control terminal is further configured to receive a station substitution instruction, and use the sorting station as the distribution station, or use the distribution station as the sorting station according to the station substitution instruction.

Optionally, the container loading and unloading device is further configured to determine items in the container on the movable carrier through an identification device and/or according to an instruction transmitted by the control terminal, and use the container as a target order container and place the target order container at the distribution station, in a case that an attribute of the items is the same as an attribute of items to be sorted corresponding to the loading and unloading instruction.

Optionally, the container loading and unloading device is further configured to determine items in the container at the sorting station through an identification device and/or according to an instruction transmitted by the control terminal, and use the container as a target order container and use the sorting station as the distribution station, in a case that an attribute of the items is the same as an attribute of items to be sorted corresponding to the loading and unloading instruction.

Optionally, the container loading and unloading device is further configured to place the container at a temporary storage position contained in the workstation for queuing based on the loading and unloading instruction, in a case that it is determined through an identification device that the container is not placeable at the sorting station or the distribution station.

Optionally, the handling device is further configured to generate a travel path based on movable carrier position information contained in the handling instruction, move to the movable carrier according to the travel path, and drive the movable carrier to move to the movable carrier parking area.

Optionally, the handling device is further configured to transport the movable carrier back to a movable carrier parking position corresponding to the movable carrier position information, in a case that a sorting task corresponding to the sorting instruction is completed.

According to a third aspect, an embodiment of the present disclosure provides a sorting method, including: receiving, by the control terminal, the sorting instruction, and driving, by the handling device, the movable carrier to move to the movable carrier parking area according to the handling instruction in the sorting instruction; and picking and placing, by the container loading and unloading device, the container on at least one of the movable carrier, the sorting station, and the distribution station according to the loading and unloading instruction in the sorting instruction, and moving the container between the movable carrier and the sorting station or the distribution station in the workstation.

The warehousing system provided in the present disclosure is provided with the workstation, the movable carrier parking area, the handling device, and the container loading and unloading device, and at least one sorting station and at least one distribution station are arranged at the workstation to reduce the distance from the sorting point to the distribution point, thus improving the distribution efficiency and improving the sorting speed. Further, the movable carrier parking area is configured to bear the handling device of the movable carrier, and the container loading and unloading device is arranged in the movable carrier parking area, thus achieving the effect that the container can be moved between the distribution station or the sorting station and the movable carrier in the workstation through the container loading and unloading device arranged in the area after the handling device transports the movable carrier to the movable carrier parking area, and reducing the participation of the operator or automatic device in the sorting process and the distribution process. Through the mutual cooperation between the container loading and unloading device and the handling device, as well as the arrangement relationship between the sorting station and the distribution station, the sorting efficiency and distribution efficiency can be improved, and the consumption of human resources can be reduced to a very large extent at the same time.

### BRIEF DESCRIPTION OF THE DRAWINGS

The drawings which are incorporated into this specification and form a part of this specification, illustrate the embodiments of the present disclosure and are used together with the description thereof to explain the principle of the present disclosure.
FIG. 1 illustrates a schematic diagram of a warehousing system according to an embodiment of the present disclosure;
FIG. 2 illustrates a structural schematic diagram of a container loading and unloading device according to an embodiment of the present disclosure;
FIG. 3 illustrates a structural schematic diagram of a container picking and placing-back box assembly in a container loading and unloading device according to an embodiment of the present disclosure;
FIG. 4 illustrates a structural schematic diagram of a warehousing system according to an embodiment of the present disclosure; and
FIG. 5 illustrates a flowchart of a sorting method according to an embodiment of the present disclosure.

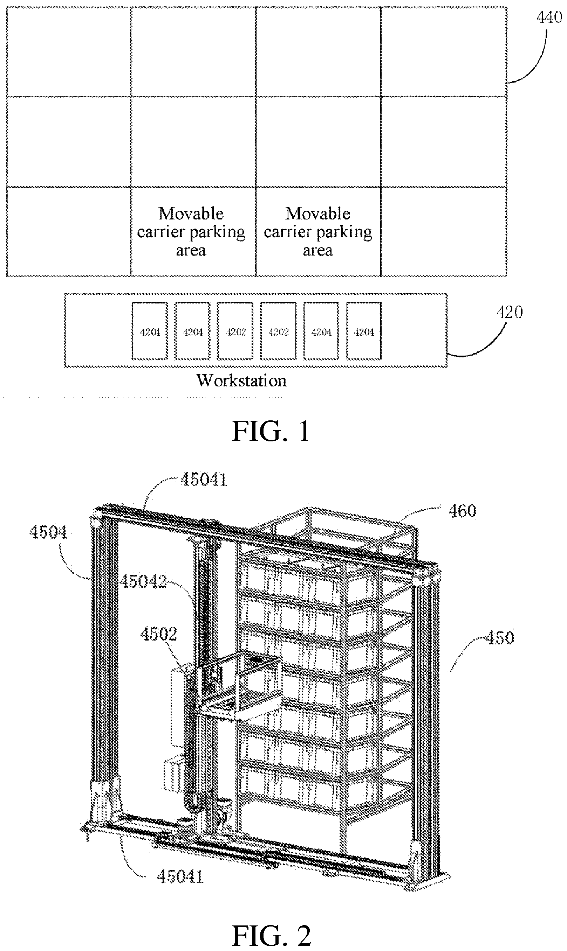

Corresponding relationships between names and reference signs of assemblies in FIG. 2 to FIG. 4 are as follows:
400-warehousing system; 410-control terminal; 420-workstation; 430-movable carrier parking area; 440-handling device; 450-container loading and unloading device; 460-movable carrier; 4202-sorting station; 4204-distribution station; 4501-base; 4502-loading and unloading assembly; 4503-picking and conveying assembly; 4504-rack body; 45041-X-axis rail; 45042-Y-axis rail; 45022-bearing assembly; 45011-bracket; and 45021-conveyor belt.

### DETAILED DESCRIPTION

Many specific details are elaborated in the following description to facilitate a full understanding of the present disclosure. However, the present disclosure may be implemented in many other ways different from those described here. Those skilled in the art may make similar promotions without violating the content of the present disclosure. Therefore, the present disclosure is not limited by specific implementations disclosed below.

The terms used in one or more embodiments of the present disclosure are solely for the purpose of describing specific embodiments, and are not intended to limit one or more embodiments of the present disclosure. The singular form "a", "the", or "said" used in one or more embodiments of the present disclosure and the attached claims is also intended to include the plural form, unless the context clearly indicates other meanings. It should also be understood that the term "and/or" used in one or more embodiments of the present disclosure refers to and includes any or all possible combinations of one or more associated listed items.

It should be understood that although the terms such as "first" and "second" may be used to describe varied information in one or more embodiments of the present disclosure, such information should not be limited to these terms. These terms are only intended to distinguish the same type of information from each other. For example, without departing from the scope of one or more embodiments of the present disclosure, "first" may also be referred to as "second", and similarly, "second" may also be referred to as "first". Depending on the context, the word "if' used here may be interpreted as "when...", "in a case that..." or "in response to determining".

Firstly, the terminology involved in one or more embodiments of the present disclosure will be explained below.

Movable carrier: it refers to an object that is transported by the handling device and is composed of one or more goods positions.

Goods position: it refers to a position on a movable carrier that can store a container or be empty, that is, no container is stored.

Container: it refers to a container that bears goods and is stored at a goods position on a movable carrier.

Handling device: it is used for transporting a movable carrier, including but not limited to backpack, jack-up, traction, and fork type handling devices.

Sorting container: it refers to a container that has been hit by a system order task but has not yet undergone a sorting operation.

Target sorting container: it refers to a sorting container that needs to be took and placed on a movable carrier based on an order task, is placed at a sorting station, waits for undergoing processing, is to undergo processing or is undergoing processing, or has undergone processing and waits for being took and placed by a container loading and unloading device at a sorting station.

Order container: it refers to a container that is located at a workstation, is hit by a system order task, and is used for storing items that have been hit by orders, but has not yet stored the items that have been hit by the orders.

Target order container: it refers to an order container that is currently undergoing distribution processing, is to undergo processing in response to an order task, has undergone processing in response to completion of an order task processing, or is to be took and placed on a put wall through a container loading and unloading device.

In a traditional workstation, a sorting station is located at a certain distance from a target order container where sorted items are placed. Generally, the workstation is provided with at least one put wall for placing order containers. The put wall is provided with a plurality of storage positions for storing the order containers. The put wall may adopt a structural form such as a movable goods shelf. An operator or automatic device sorts corresponding items from the target sorting container at the sorting station. It is required to move a certain distance to deliver the items into the target order container on the put wall. As a result, certain time waste is caused.

In order to solve the above problem, this application provides a warehousing system and further relates to another warehousing system, which will be described below one by one in detail in the following embodiments.

This application provides a warehousing system. As illustrated in FIG. 1 to FIG. 3, the warehousing system includes a workstation, a movable carrier parking area, a handling device, and a container loading and unloading device. The workstation includes at least one sorting station and at least one distribution station. The sorting station and the distribution station are configured to process a container. The movable carrier parking area is configured to park the handling device bearing a movable carrier and is provided with a container loading and unloading device. The handling device is responsible for transporting the movable carrier to the movable carrier parking area. The movable carrier is configured to bear the container. The container loading and unloading device is responsible for moving the container between the workstation and the movable carrier. It is to be understood that the container loading and unloading device can also pick and place the container on or between movable carriers and adjust the position of the container.

Specifically, the sorting station and the distribution station are located on the same side where the operator or automatic device performs operation tasks. When a task is performed, the container loading and unloading device places a sorting container that needs to be sorted at the sorting station, and the sorting container placed at the sorting station automatically becomes a target sorting container. The container loading and unloading device will place a target order container that matches the target sorting container at the distribution station. The operator or automatic device sorts corresponding goods from the target sorting container according to order information, and can directly deliver them into the target order container without turning around or walking. In a case that the target sorting container only corresponds to one target order container, after the target sorting container has undergone a sorting operation, it can be moved away from the sorting station through the container loading and unloading device, and the target order container can also be moved away from the distribution station through the container loading and unloading device. The container loading and unloading device will place a next sorting container that requires sorting at the sorting station and place a target order container corresponding to the sorting container at the distribution station. In a case that the target sorting container corresponds to more than one target order container, after completing the item sorting of one target order container, the container loading and unloading device will move a current target order container away from the distribution station and place a next corresponding target order container until the target sorting container completes all sorting tasks.

It should be noted that the sorting station and the distribution station may be arranged horizontally or vertically within the workstation. Specifically, horizontal arrangement refers to that the sorting station and the distribution station are adjacently arranged from left to right in the same horizontal plane, as illustrated in FIG. 1. In the application stage, the container loading and unloading device can move the container leftwards and rightwards to deliver the goods in the sorting container at the sorting station into the order container at the distribution station on the left side or the right side. Vertical arrangement specifically refers to that the sorting station and the distribution station are adjacently arranged up and down in the vertical direction, and may be arranged in a plurality of layers. That is, the sorting station and the distribution station are vertically arranged along a central axis. In the application stage, the container loading and unloading device may move the container upwards and downwards to deliver the goods in the sorting container at the sorting station to the order container at the distribution station on the upper layer or the lower layer. In addition, the sorting station and the distribution station may also be arranged in a mixed manner within the workstation, that is, horizontally and vertically arranged to form a multi-layer structure. For example, the first layer is all arranged as the sorting station, and the second layer is all arranged as the sub-station. For another example, the sorting station and the distribution station are alternately arranged on each layer. When moving the goods through the container loading and unloading device, it is possible to transfer the goods back and forth between different sorting stations and distribution stations distributed in space, so as to save the space.

Specifically, the workstation refers to an operating area with one or more sorting stations or distribution stations, which supports the operator or the automatic device to complete the sorting process at the sorting station of the workstation. Afterwards, the distribution process docked with the sorting process may also be completed at the distribution station of the workstation, without requiring the operator or the automatic device to travel too far, so that the sorting and distribution operations can be completed in a relatively short time, so as to improve the sorting and distribution efficiency. Correspondingly, the container specifically refers to a container configured to store materials or goods, including but not limited to material boxes, cardboard boxes, plastic boxes, metal boxes, packaging boxes of goods themselves, etc., and the container is stored on movable carrier, placed at the sorting station for goods sorting, or placed at the distribution station for goods distribution. Correspondingly, the movable carrier refers to a carrier placed on a goods shelf or a tray in the warehousing area that can store the container. In a case that the movable carrier is a goods shelf, it may include one or more goods shelf layers. Each goods shelf layer includes one or more goods positions. Each goods position is configured to store a container, and the movable carrier supports the movement of the handling device. The handling device specifically refers to a device configured to transport the movable carrier, including but not limited to backpack, jack-up, traction, and fork type handling devices. The movable carrier parking area specifically refers to an area where the handling device bearing the movable carrier is parked. Each movable carrier parking area is provided with a container loading and unloading device for picking and placing the container on the movable carrier transported by the handling device. Correspondingly, the container loading and unloading device specifically refers to a device that moves the container, which can take out the container from the movable carrier and placed it at the sorting station or the distribution station in the workstation, take out the container at the sorting station or the distribution station in the workstation and place it at an empty goods position on the movable carrier, or take out the container on the movable carrier and place it at the docking port outside the workstation.

In addition, in the area to which the workstation belongs, one or more adjacent workstations may be arranged. Different container loading and unloading devices may be used to pick and place the sorting containers at the sorting stations in different workstations, or pick and place the distribution containers at the distribution stations in different workstation, so as to improve the sorting and distribution efficiency, so that operators or automatic devices can transfer items from the sorting stations to the distribution stations in a plurality of workstations in the area to complete the sorting tasks of orders.

It should be noted that in a case that the container is placed at the sorting station, it indicates items are required to be taken out from the container during sorting, and then the container is used as the target sorting container; when the container is placed at the distribution station, the container is the target order container for containing the goods selected from the target sorting container that matches the container. The target order container may correspond to the goods in one or more target sorting containers. In addition, one or more movable carrier parking areas may be arranged, so as to support the parking of one or more movable carriers, achieving the parallel completion of task processing operations for different orders. Moreover, one container loading and unloading device may correspond to at least one movable carrier parking area sub-area, so as to facilitate the operation on the container. In addition, the container loading and unloading devices may also be arranged between the distribution station and the sorting station, or respectively at the distribution station and the sorting station, so as to ensure the smooth completion of the sorting task and improve the sorting efficiency at the same time.

Further, in order to improve the distribution efficiency and save the operating time of the operators or automatic devices, the put wall corresponding to the distribution station may be arranged on the same side as the movable device parking area, or on the other side at a 90-degree angle to the movable carrier parked in the movable carrier parking area, so that the operators and automatic devices face to the put wall without rotating too much to support the completion of distribution operations. In practical applications, the arrangement position of the put wall may be set according to the actual needs, which is not limited in this embodiment.

Based on this, in a case that it is required to place the items in the container at the workstation including the sorting station and the distribution station for sorting and distribution, the movable carrier to which the sorting container that needs to be operated belongs can be moved to the movable carrier parking area by controlling the handling device. Then, the container loading and unloading device arranged in this area picks and places the sorting container on the movable carrier and place it at the sorting station in the workstation. In this case, the sorting container is used as the target sorting container. Then, the operator or automatic device performs the sorting operation of goods at the sorting station. After the sorting is completed, the goods are driven to be delivered into the target order container at the distribution station in the workstation. Therefore, the integration of sorting and distribution is achieved, and the consumption of human resources is reduced.

For example, in a case that it is required to sort an item a, firstly a sorting container A where the item a is placed is determined. Then, a movable carrier S where the sorting container A is stored is determined. Next, a handling instruction is transmitted to a handling device P. The handling device transports the movable carrier S storing the sorting container A to the movable carrier parking area. Then, the container loading and unloading device takes out the sorting container A on the movable carrier S and places it at the sorting station of the workstation, where the container A is used as a target sorting container A. At this time, the operator or automatic device starts sorting the item a. By scanning the item a, it is determined that the item a needs to be placed in the target order container A located in the put wall of the distribution station. Since both the sorting station and the distribution station are located on the same side where the operator or automatic device performs the operation, the operator or automatic device can directly deliver the item a from a sorting goods position A to the target order container A after scanning, so as to complete the operation of the sorting order corresponding to the item a. Finally, the container loading and unloading device places the target sorting container A located at the sorting station onto the movable carrier S again, either at the original goods position or other positions. Afterwards, the handling device P transports the movable carrier S back to the warehousing area, or to a next workstation for sorting processing.

It should be noted that after the handling device transports the movable carrier to the movable carrier parking area, the container loading and unloading device will begin to operate the sorting container. In this process, the handling device may wait for the sorting to be completed and directly transport the movable carrier to the warehousing area, or place the movable carrier in the parking area and then perform other tasks. In addition, in a case that the workstation performs replenishment or sorting, more time may be consumed. Therefore, at this time, the handling device may receive new handling instructions to move other movable carriers according to the new handling instructions. After the container loading and unloading device completes the operation, the movable carrier may be moved back to the warehousing area by the original handling device or other handling devices. In practical applications, a proper method may be selected for processing according to the actual application scenarios, which is not limited in this embodiment.

In this embodiment, in order to support the storage of more containers, the movable carrier includes at least one goods position, the goods position is configured to store the container, and the container is a sorting container or an order container.

Based on this, considering that different sorting orders require different items, in a case that the number of items contained in a container is greater than the number of items to be sorted, this container is called a sorting container and needs to be placed at the sorting station for sorting operations. After being placed at the sorting station, it is used as a target sorting container for subsequent sorting operations. In a case that the number of items contained in a container is equal to or less than the number of items to be sorted, this container is an order container and may be directly placed at the distribution station for distribution operations. After the order container completes the docking with the matching target sorting container and completes the storage of the items, it is used as a target order container. Therefore, whether the container stored at the goods position on the movable carrier is used as a sorting container or an order container may be determined based on the sorting order, and it may be different containers in different orders.

In this embodiment, in order to support the execution of a plurality of sorting tasks simultaneously, the movable carrier parking area includes at least one movable carrier parking sub-area, and one container loading and unloading device corresponds to at least one movable carrier parking sub-area.

Specifically, the movable carrier parking sub-area refers to an area in the movable carrier parking area for parking each handling device that drives the movable carrier. Considering that each workstation includes at least one sorting station and at least one distribution station, in order to support each workstation to perform operations on a plurality of sorting tasks simultaneously, one or more movable carrier parking sub-areas may be arranged in the movable carrier parking area corresponding to the workstation. At the same time, in order to facilitate operations and improve resource utilization, one or more movable carrier parking sub-areas may be provided with one container loading and unloading device, that is, one container loading and unloading device corresponds to one or more movable carrier parking sub-areas, so that the container loading and unloading device can perform the picking and placing operations on the container after the handling device that drives the movable carrier is parked in the movable carrier parking sub-area, thus completing the picking and placing of the container without requiring the participation of the operator or the automatic device.

Referring to the schematic diagram illustrated in FIG. 1, the movable carrier parking area corresponding to the workstation includes a plurality of movable carrier parking sub-areas, and each movable carrier parking sub-area can be used for parking one handling device that drives the movable carrier. Correspondingly, the workstation includes a plurality of sorting stations and distribution stations, so that sorting and distribution operations can be simultaneously completed without requiring the operator or the automatic device to move around, thus effectively improving the sorting efficiency.

In this embodiment, in order to facilitate the sorting and distribution operations of the operator or the automatic device in the workstation, the workstation further includes a guidance device. Specifically, the guidance device may be a display or reminder device, etc., which is not limited in this embodiment. The guidance device is configured to display information that guides the operators or the automatic device.

For example, after the container is placed at the sorting station or the distribution station, reminder information may be transmitted to the operator or the automatic device. Alternatively, after the item to be sorted is scanned, reminder information may be transmitted to the operator or the automatic device to indicate the position where the item is placed. Alternatively, in a case that the sorting container or the order container cannot store more items, overload reminder information may be transmitted to the operator or the automatic device. In practical applications, the information transmitted by the guidance device to the user may be configured according to the actual application scenarios, which is not limited in this embodiment.

In this embodiment, considering the upper limit of the ability of the workstation in processing sorting orders, in a case that the sorting container is blindly transported to the sorting station or the distribution station, it may cause a backlog of sorting tasks and cannot ensure the sorting efficiency. Therefore, the workstation is further provided with a temporary storage position. The temporary storage position is configured to temporarily store the sorting container or the order container. That is to say, in a case that the distribution station or the sorting station in the workstation is saturated with sorting tasks, in order to ensure that subsequent sorting tasks can proceed in an orderly manner, after the handling device drives the movable carrier to the movable carrier parking area, a container corresponding to a new sorting task may be temporarily placed at the temporary storage position through the container loading and unloading device. This container may be the sorting container and/or the order container. All containers queue in sequence until the sorting station or distribution station can perform sorting and distribution, and then the container is transported to the corresponding station for processing by the container loading and unloading device, the operator or the automatic device.

During specific implementation, the workstation may be provided with one or more temporary storage positions. The number of the temporary storage positions may be determined according to the number of the sorting tasks of the workstation. In a case that the number of the sorting tasks is large, more temporary storage positions may be arranged, and vice versa, fewer temporary storage positions may be arranged. At the same time, the number of the temporary storage positions may be dynamically increased or decreased, which is not limited in this embodiment. At the same time, the temporary storage position may be arranged for each sorting station or each distribution station, that is, each sorting station corresponds to at least one temporary storage position or each sub-station corresponds to at least one temporary storage position, to provide more convenient sorting and distribution operations.

In this embodiment, in order to make more full use of each work station (sorting station or distribution station) in the workstation and improve the efficiency of processing sorting tasks, a substitution relationship is pre-established between a target sorting container and a target order container; in a case that items contained in the target sorting container have the same attribute as items to be put into the target order container, the target sorting container is used as the target order container based on the substitution relationship; correspondingly, the sorting station corresponding to the target sorting container is switched to the distribution station.

Specifically, the substitution relationship refers to a mutual substitution relationship between the target sorting container and the target order container. That is to say, in a case that the number and type of items contained in the target sorting container are the same as that of the items that need to be put into the target container, it indicates that all items in the target sorting container need to be transferred to the target order container during sorting. In order to improve the sorting efficiency, the target sorting container may be directly used as the target order container based on the substitution relationship to avoid wasting time during item transfer operations. At the same time, the target order container pre-allocated by the system will also be re-allocated by the system to store items corresponding to other orders.

Further, in order to further improve the sorting efficiency, the sorting station and the distribution station may be substituted, that is, the sorting station may be used as a distribution station, or the distribution station may be used as a sorting station. Based on this, after the target sorting container is used as the target order container, in order to reduce operators or automatic devices that move the container used as the target order container to the distribution station, at this time, the sorting station where the container is placed may also be directly substituted as the distribution station for subsequent distribution processing.

In addition, the substitution process of using the target order container as the target sorting container and using the distribution station as the sorting station is similar to that described above, which will not be repeated in this embodiment. In addition, in a case that the sorting station or the distribution station is in shortage, any type of station may also be temporarily used as another type of station to assist in completing the sorting task.

In this embodiment, when the container loading and unloading device moves the container, it is actually completed through its provided loading and unloading assembly, that is, the container loading and unloading device includes a loading and unloading assembly, the container loading and unloading device includes a loading and unloading assembly, the loading and unloading assembly is responsible for moving the container between the sorting station/distribution station and the movable carrier, moving the container between goods positions of the movable carrier, moving the container between the movable carrier and a target movable carrier, moving the container between the sorting station and a docking port outside the workstation, moving the container between the distribution station and the docking port outside the workstation, or moving the container between the movable carrier and the docking port outside the workstation.

Specifically, the docking port outside the workstation refers to an area arranged outside the workstation for storage and interaction with other devices. For example, after the sorting task at the sorting station or the distribution station is completed, the container that is no longer needed may be placed at the corresponding docking port outside the workstation through the container loading and unloading device, and then is taken away by the corresponding operators or automatic devices or the container loading and unloading devices at other sorting stations or distribution stations to complete other sorting tasks. Correspondingly, the loading and unloading assembly specifically refers to an assembly that can pick and place the container, including but not limited to suction cup type, hooking type, grabbing type, or robotic arm type assemblies.

Based on this, in the processing of the sorting task, the loading and unloading assembly can move the container between the sorting station/distribution station and the movable carrier, move the container between goods positions of the movable carrier, or move the container between the movable carrier and a target movable carrier. The target movable carrier specifically refers to another movable carrier that can store a container. After the sorting task is completed, it can move the container between the sorting station and the docking port outside the workstation, move the container between the distribution station and the docking port outside the workstation, or move the container between the movable carrier and the docking port outside the workstation. During specific implementation, the container movement operation of the loading and unloading assembly is influenced by the actual application scenarios and can be completed according to the instruction during the specific implementation, which is not limited in this embodiment.

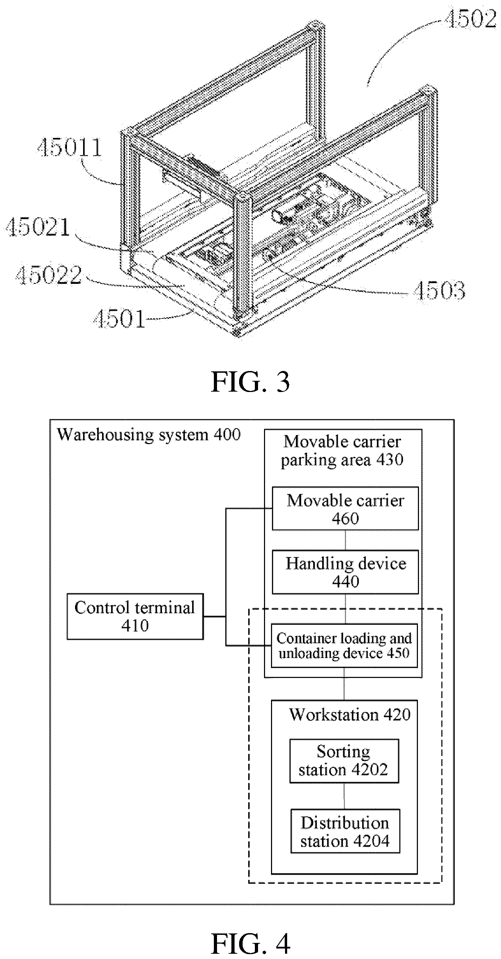

In practical applications, in order to facilitate the picking and placing operations of the containers, referring to FIG. 2 and FIG. 3, the container loading and unloading device 450 may be arranged as a mechanism illustrated in FIG. 2. What is placed in front of the container loading and unloading device 450 is a movable carrier 460. Based on this, the container loading and unloading device 450 includes a rack body 4504, and the rack body 4504 includes an X-axis rail 45041 and a Y-axis rail 45042 perpendicular to each other. The X-axis rail 45041 and the Y-axis rail 45042 are arranged on a vertical plane. Specifically, the Y-axis rail is configured to move along the X-axis rail, and the loading and unloading assembly 4502 is configured to move along the Y-axis rail.

Further, referring to the container loading and unloading device 450 illustrated in FIG. 2, it can be seen that in a case that it is required to perform the picking and placing operation of the sorting container on the movable carrier 460, it needs to be completed by the loading and unloading assembly 4502. That is to say, the loading and unloading assembly 4502 will move up and down along the Y-axis rail 45042, and the Y-axis rail 45042 will also move left and right along the X-axis rail 45041, so that the loading and unloading assembly 4502 can align with the goods position for placing the container to complete the picking and placing operation of the sorting container.

Further, in a case that it is required to complete the picking and placing operation of the sorting container, the loading and unloading assembly 4502 may be arranged as a mechanism illustrated in FIG. 3. The loading and unloading assembly 4502 is supported by a base 4501. The base 4501 may be arranged in any structure such as a flat plate or a frame, and may be arranged at the bottom of or around a bearing assembly 45022. Those skilled in the art can choose the structure and position of the base. In an optional embodiment, the base 4501 is arranged in a frame structure and may be arranged below the bearing assembly 45022 to support the bearing assembly 45022. A bearing surface for supporting the container is arranged on the bearing assembly 45022, and above the bearing surface is an accommodating space for accommodating the container.

In addition, considering factors such as uneven ground or mounting errors of the movable carrier, which may cause deviations between the container loading and unloading device 450 and the goods position on the movable carrier, in order to improve the position accuracy, the loading and unloading assembly 4502 further includes a positioning system. The positioning system is configured to determine relative positions of the loading and unloading assembly 4502 and the movable carrier. In a case that the positioning system detects that the position deviation between the loading and unloading assembly 4502 and the goods position on the movable carrier reaches a preset range, it is required to adjust the position of the loading and unloading assembly 4502. The positioning system may be a visual scanning module, a laser scanning module, or an infrared scanning module, which identifies the corresponding position on the movable carrier and obtains the position information of the container or goods position. As illustrated in FIG. 3, the positioning system may be relatively arranged on the base 4501. A bracket 45011 may be arranged on the base 4501. The bracket 45011 is located above the bearing assembly 45022 and avoids the accommodating space to avoid interference with the movement of the container. The bracket 45011 may be arranged as a gantry-shaped structure. A bottom end of the bracket 45011 is fixedly connected onto two sides of the first open end of the bearing assembly 45022. The positioning system is mounted at a top of the bracket 45011, and is located above the bearing assembly 45022.

In an optional embodiment, in order to move the container on the movable carrier to the sorting station, the distribution station, or the docking port outside the workstation through the loading and unloading assembly 4502, the bearing assembly 45022 on the loading and unloading assembly 4502 further includes a conveyor belt 45021. An upper surface of the conveyor belt 45021 is a bearing surface for supporting the container. The conveyor belt 45021 can convey the container in the horizontal direction, the conveying direction of the conveyor belt 45021 may be determined according to the picking and placing instruction. In a case that a container needs to be placed on a movable carrier, it can be rotated towards a direction of the position where the movable carrier is placed. Conversely, in a case that a container on a movable carrier needs to be placed at the sorting station, the distribution station, or the docking port outside the workstation, it can be rotated towards a direction opposite to the direction of the position where the movable carrier is placed.

Further, in order to pull the container onto the conveyor belt 45021 and place it at the target position through the conveyor belt 45021, the loading and unloading assembly 4502 further includes a picking and conveying assembly 4503. The picking and conveying assembly 4503 includes a suction cup mechanism to suck the container through the suction cup mechanism. Afterwards, the container is pulled into the loading and unloading assembly 4502 through a guiding mechanism connected to the picking and conveying assembly 4503, and the picking and placing operation of the container is completed through the conveyor belt 45021.

In this process, in order to improve the sorting efficiency, after the loading and unloading assembly 4502 grabs the container, the direction of the loading and unloading assembly 4502 can be adjusted while it moves along the rail, so that the loading and unloading assembly 4502 can be finely tuned in direction to align with the sorting station, the distribution station, or the docking port outside the workstation where the container needs to be placed. The adjustment of the direction of the loading and unloading assembly 4502 may be completed through rotation, which is not limited in this embodiment.

In an optional implementation, the sorting station, the distribution station, and/or the docking port outside the workstation may be directly arranged on the other side of the container loading and unloading device 450 to directly turn the direction and dock with the sorting station, the distribution station, and/or the docking port outside workstation after the container loading and unloading device 450 picks and places the container, so as to improve the sorting efficiency.

In this embodiment, in order to improve the quick docking between the sorting process and distribution process to ensure the sorting efficiency, the sorting station may be adjacent to the distribution station, and the sorting station and the distribution station are docked by at least one operator or automatic device. That is to say, the sorting station and the distribution station having a corresponding relationship in the same workstation may be adjacent to each other, so that the operator or the automatic device can complete the sorting operation and the distribution operation without moving too far, thus ensuring the sorting efficiency.

The warehousing system provided in the present disclosure is provided with the workstation, the movable carrier parking area, the handling device, and the container loading and unloading device, and at least one sorting station and at least one distribution station are arranged at the workstation to reduce the distance from the sorting point to the distribution point, thus improving the distribution efficiency and improving the sorting speed. Further, the movable carrier parking area is configured to bear the handling device of the movable carrier, and the container loading and unloading device is arranged in the movable carrier parking area, thus achieving the effect that the container can be moved between the distribution station or the sorting station and the movable carrier in the workstation through the container loading and unloading device arranged in the area after the handling device transports the movable carrier to the movable carrier parking area, and reducing the participation of the operator or automatic device in the sorting process and the distribution process. Through the mutual cooperation between the container loading and unloading device and the handling device, as well as the arrangement relationship between the sorting station and the distribution station, the sorting efficiency and distribution efficiency can be improved, and the consumption of human resources can be reduced to a very large extent at the same time.

Corresponding to the above system embodiment, the present disclosure further provides a warehousing system embodiment. FIG. 4 illustrates a structural schematic diagram of a warehousing system according to an embodiment of the present disclosure. As illustrated in FIG. 4, the warehousing system 400 includes a control terminal 410, at least one workstation 420, at least one movable carrier parking area 430, at least one handling device 440, at least one container loading and unloading device 450, and at least one movable carrier 460 for storing a container. The workstation 420 includes at least one sorting station 4202 and at least one distribution station 4204.

The control terminal 410 is configured to, in a case that a sorting instruction is received, transmit a handling instruction to the handling device 440 and a loading and unloading instruction to the container loading and unloading device 450 according to the sorting instruction.

The handling device 440 is configured to move to the movable carrier 460 based on the handling instruction and to transport the movable carrier 460 to the movable carrier parking area 430.

The container loading and unloading device 450 is configured to pick and place a container on at least one of the movable carrier 460, the sorting station 4202, and the distribution station 4204 based on the loading and unloading instruction, and move the container between the movable carrier 460 and the sorting station 4202 or the distribution station 4204 in the workstation 420.

In another warehousing system provided in this embodiment, for the same or corresponding description content as the above warehousing system, a reference may be made to the above embodiment, which will not be repeated in this embodiment for the sake of convenience in description.

Specifically, the control terminal 410 refers to a server that processes the sorting task, which is configured to transmit a container sorting instruction to the handling device 440 and the container loading and unloading device 450. Based on this, in a case that the control terminal 410 receives a sorting instruction, it indicates that a sorting task is required to be completed at this time. In order to improve the sorting efficiency, a handling instruction may be transmitted to the handling device 440 and a loading and unloading instruction is transmitted to the container loading and unloading device 450 based on the sorting instruction. The sorting instruction contains information about the movable carrier, goods position information, and container information, so that the handling device 440 can move the movable carrier to the movable carrier parking area corresponding to the task, and the container loading and unloading device 450 can accurately pick and place the container. Correspondingly, the handling instructions can guide the handling device to determine and transport the movable carrier, that is, the handling instruction carries the movement trajectory information of the handling device. The loading and unloading instruction can guide the container loading and unloading device to complete the picking or placing of the container, that is, the loading and unloading instruction carries the position information of the container and the movement trajectory information of the container loading and unloading device.

Further, after the handling device 440 receives the handling instruction, it indicates that it is required to move the movable carrier to the target position to perform the sorting task. At this time, the movable carrier that needs to be transported can be determined according to the handling instruction, and then it travels to the movable carrier 460 to transport the movable carrier 460 to the movable carrier parking area 430. At this time, the container loading and unloading device 450 receives the loading and unloading instruction, picks and places at least one container located on the movable carrier 460, at the sorting station 4202, or at the distribution station 4204 according to the loading and unloading instruction, and moves the container between the movable carrier 460 and the sorting station 4202 or the distribution station 4204 in the workstation 420.

For example, the control terminal receives a sorting instruction corresponding to a sorting task, determines that a set quantity of items a needs to be sorted from a sorting container A on a movable carrier S, and distributes them to an order container A at the distribution station. At this time, the control terminal will transmit a handling instruction to a handling device P according to a container adjustment instruction, and transmit a loading and unloading instruction to the container loading and unloading device at the same time. After receiving the handling instruction, the handling device P determines the position of the movable carrier S in the warehousing area, and moves to that position to transport the movable carrier S. Then, the movable carrier S is transported to the movable carrier parking area. At this time, the container loading and unloading device will perform a container picking operation on the sorting container A on the movable carrier S according to the loading and unloading instruction, and place the took sorting container A at the sorting station A in the workstation. At this time, the sorting container A is a target sorting container. Then, the operator or automatic device can sort the set quantity of items a from the target sorting container and distribute them to the target order container A at the distribution station to complete the sorting task. In addition, when the items a contained in the container A correspond to the items to be distributed, the container loading and unloading device can directly place the sorting container A at the distribution station as the target order container A, or after it is placed at the sorting station, the sorting station is substituted as a distribution station, and the original distribution station is substituted as a sorting station to improve the task processing efficiency. Further, after the sorting is completed, the container loading and unloading device can pick the sorting container A at the sorting station and place it back to the original goods position on the movable carrier S, or to other goods positions on the movable carrier, or to other movable carriers. Then, the handling device S transports the movable carrier storing the sorting container A to the original position or other positions in the warehousing area, thus achieving the repositioning of the movable carrier storing the container A.

To sum up, at least one sorting station and at least one distribution station are arranged at the workstation at the same time, so as to reduce the distance from the sorting point to the distribution point, thus improving the distribution efficiency and improving the sorting speed.

In this embodiment, since the container loading and unloading device supports the movement of the container, in a case that it is required to take down the sorting container from the goods position on the movable carrier, the container loading and unloading device 450 needs to perform different operations according to the loading and unloading instruction. In this embodiment, in a case that the loading and unloading instruction is a sorting related loading and unloading instruction, the container loading and unloading device 450 is further configured to determine coordinate information of a target goods position of the container on the movable carrier based on the sorting related loading and unloading instruction; pick and place the container based on the coordinate information of the target goods position, and place the container at the sorting station or the distribution station.

Specifically, the sorting related loading and unloading instruction refers to an instruction for placing the sorting container on the movable carrier at the sorting station or the distribution station. Based on this, in a case that the container loading and unloading device determines that it is required to transport the sorting container on the movable carrier to the sorting station or the distribution station, firstly the position information of the target goods position of the sorting container on the movable carrier is determined based on the sorting related loading and unloading instruction, then the loading and unloading assembly is moved to that position to pick and place the sorting container at the goods position, and finally it is placed at the sorting station or the distribution station according to the sorting task.

It should be noted that for the process of moving the sorting container by the container loading and unloading device 450, a reference may be made to the same or corresponding description content in the above embodiment, which will not be repeated here.

In this embodiment, after the sorting station or the distribution station completes the current sorting task, in order to avoid the sorting operation of the current task from influencing the subsequent sorting processing, the container may be repositioned after the sorting is completed, and the movable carrier may also be repositioned. The container loading and unloading device 450 is further configured to, in a case that a container placing-back instruction transmitted by the control terminal is received, pick and place the container placed at the sorting station or the distribution station according to the container placing-back instruction, and place the container at the target goods position on the movable carrier. That is to say, after the sorting task is completed, the container loading and unloading device 450 will once again receive the container placing-back instruction transmitted by the control terminal 410. At this time, the container loading and unloading device 450 will pick and place the container at the sorting station 4202 or the distribution station 4204 based on the instruction, and place it back to the target goods position on the movable carrier. The target goods position is the original position of the container.

In this embodiment, in order to ensure orderly sorting, at least one temporary storage position may be arranged in the workstation. In a case that it is required to move a container at the temporary storage position, it needs to be completed through the container loading and unloading device 450. That is, the container loading and unloading device 450 is further configured to pick and place a container to be moved located at the temporary storage position in the workstation, and place the container to be moved at the sorting station, the distribution station, the movable carrier, or a docking port outside the workstation.

Specifically, the container to be moved refers to a container at the temporary storage position that needs to be moved to the sorting station, the distribution station, the movable carrier, or a docking port outside the workstation. The container may be a sorting container, an order container, a target sorting container, or a target order container. Based on this, in a case that it is the turn of a certain container at the temporary storage position when the sorting containers that need to be sorted queue sequentially, the sorting container is determined as the container to be moved at this time. Then, the container to be moved is took and placed by the container loading and unloading device 450, and then is placed at the sorting station or distribution station corresponding to the sorting task, or is placed back to the movable carrier, or is placed at the docking port outside the workstation for subsequent sorting, distribution or handover to other devices for processing, so as to ensure that the sorting tasks can be executed sequentially.

In this embodiment, in order to cope with complex sorting scenarios, the sorting station and the distribution station may also be dynamically switched based on the instruction from the control terminal 410. The control terminal 410 is further configured to receive a station substitution instruction, and use the sorting station 4202 as the distribution station 4204, or use the distribution station 4204 as the sorting station 4202 according to the station substitution instruction.

That is to say, the sorting station and the distribution station may be dynamically switched. In order to facilitate the execution of sorting tasks and improve the sorting efficiency, any one or more distribution stations in the workstation may be used as sorting stations, or one or more sorting stations may be used as distribution stations, thus achieving dynamic adjustment of the number of different types of stations to adapt to different sorting tasks and improving the sorting efficiency.

In this embodiment, in order to improve the sorting efficiency, containers that meet the requirements may also be directly used as target order containers. The container loading and unloading device 450 is further configured to determine items in the container on the movable carrier through an identification device and/or according to an instruction transmitted by the control terminal; in a case that an attribute of the items is the same as an attribute of items to be sorted corresponding to the loading and unloading instruction, use the container as a target order container and place the target order container at the distribution station.

Specifically, the identification device refers to a device that can identify items in a container. The device may be a sensor or a camera device, etc. Correspondingly, the items to be sorted specifically refer to items corresponding to the sorting task. Based on this, in a case that the container loading and unloading device scans through the identification device that the quantity and type of items in the target sorting container are the same as those of items to be sorted for the sorting task, and/or determines that the quantity and type of items in the container are the same as those of items to be sorted for the sorting task according to the instruction fed back from the control terminal, it indicates that all items in the container need to be moved into the target order container subsequently. To help the operator or the automatic device to operate, the target sorting container may be directly used as the target order container and is placed at the distribution station. That is to say, after the container loading and unloading device 450 determines the target sorting container as the target order container, the container is not required to be placed at the sorting station for the operator or the automatic device to sort, but is directly placed at the distribution station as the target order container, thus saving the time for the operator or the automatic device to move the items.

In addition, after the target sorting container is used as the target order container, this process still requires the container loading and unloading device 450 to perform picking and placing operations from the sorting station to the distribution station. Therefore, in order to improve sorting efficiency, the sorting station may also be directly used as the distribution station. The container loading and unloading device 450 is further configured to determine items in the container at the sorting station through an identification device and/or according to an instruction transmitted by the control terminal; in a case that an attribute of the items is the same as an attribute of items to be sorted corresponding to the loading and unloading instruction, use the container as a target order container and use the sorting station as the distribution station. That is to say, the container located at the sorting station is not required to be moved to the distribution station, and the sorting station may be directly used as the distribution station for subsequent distribution processing.

For example, in a case that a sorting task is to sort n items a, the container loading and unloading device will identify a target sorting container A storing items a at a sorting station. Based on the identification result, it is determined that the target sorting container A contains n items. At this time, in a case that the container loading and unloading device places the target sorting container A at the sorting station, then the operator or the automatic device is required to move the items in the target sorting container A located at the sorting station to the distribution station, which will greatly reduce the sorting efficiency. Therefore, at this time, the container A may be directly used as the target order container, and the sorting station where the target sorting container A is placed may be used as the distribution station, without requiring the operator or automatic device to perform the distribution operation.

In this embodiment, in order to ensure that the sorting tasks can be executed sequentially without influencing the execution of other parallel sorting tasks, containers that cannot be placed may be temporarily placed at the temporary storage position. That is, the picking and placing mechanism 450 is further configured to, in a case that it is determined through the identification device that the container is not placeable at the sorting station or the distribution station, place the container at a temporary storage position in the workstation for queuing based on the loading and unloading instruction.

That is to say, in a case that the identification device determines that a new sorting container is not placeable at the sorting station or the distribution station, it indicates that the sorting station or the distribution station is currently in a task saturation state. In order to ensure that subsequent sorting tasks are executed sequentially, the container loading and unloading device 450 may place it at the temporary storage position for queuing based on the waiting information in the loading and unloading instruction until it is the turn to execute its corresponding sorting task. Then, sorting and distribution operations are performed on the items in the container.

In this embodiment, in a case that the handling device transports the movable carrier, since the movable carrier is arranged in the warehousing area and there may be a large number of containers in the warehousing area, in order to ensure that the correct container is driven, the handling device 440 is further configured to generate a travel path based on movable carrier position information contained in the handling instruction, move to the movable carrier according to the travel path, and drive the movable carrier to move to the movable carrier parking area. Correspondingly, the handling device 440 is further configured to, in a case that a sorting task corresponding to the sorting instruction is completed, transport the movable carrier back to a movable carrier parking position corresponding to the movable carrier position information.

Specifically, the movable carrier position information refers to position information corresponding to a movable carrier storing a container associated with a sorting task. Correspondingly, the movable carrier parking position refers to a position where the movable carrier is parked. This position is located in the storage area of the movable carrier and is a regional position in the storage area. Correspondingly, the travel path specifically refers to a path along which the handling device moves from the current position to the movable carrier position.

Based on this, in a case that the handling device receives the handling instruction, in order to ensure that the subsequent sorting is completed accurately, the handling device may generate a travel path based on movable carrier position information carried in the handling instruction, and move to the movable carrier position according to the travel path to transport the movable carrier. After the sorting task is completed, in order not to influence the container selection on the movable carrier for the subsequent sorting tasks, the handling device is further required to transport the movable carrier back to its original position.

In the warehousing system provided in this embodiment, at least one sorting station and at least one distribution station are arranged at the workstation, so as to reduce the distance from the sorting point to the distribution point, thus improving the distribution efficiency and improving the sorting speed. Further, the movable carrier parking area is configured to bear the handling device of the movable carrier, and the container loading and unloading device is arranged in the movable carrier parking area, thus achieving the effect that the container can be moved between the distribution station or the sorting station and the movable carrier in the workstation through the container loading and unloading device arranged in the area after the handling device transports the movable carrier to the movable carrier parking area, and reducing the participation of the operator or automatic device in the sorting process and the distribution process. Through the mutual cooperation between the container loading and unloading device and the handling device, as well as the arrangement relationship between the sorting station and the distribution station, the sorting efficiency and distribution efficiency can be improved, and the consumption of human resources can be reduced to a very large extent at the same time.

This embodiment further provides a sorting method applied to the warehousing system, which is specifically as follow:

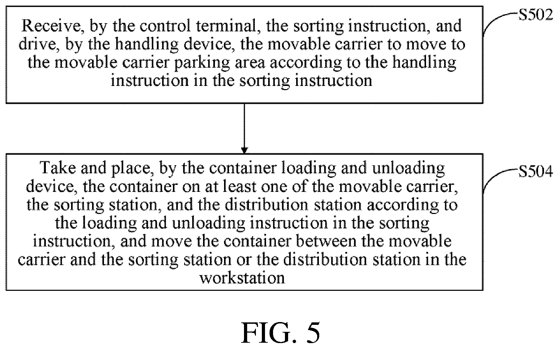

FIG. 5 illustrates a flowchart of a sorting method according to an embodiment of the present disclosure. The sorting method is applied to the warehousing system described above, which includes the following steps:
In step S502, the control terminal receives the sorting instruction, and the handling device drives the movable carrier to move to the movable carrier parking area according to the handling instruction in the sorting instruction.
In step S504, the container loading and unloading device picks and places the container on at least one of the movable carrier, the sorting station, and the distribution station according to the loading and unloading instruction in the sorting instruction, and moves the container between the movable carrier and the sorting station or the distribution station in the workstation.

During practical implementation, the sorting method provided in this embodiment is applied to the warehousing system. For the same or corresponding description content as the above warehousing system in the sorting method provided in this embodiment, a reference may be made to the description in the above embodiment, which will not be repeated in this embodiment.

To sum up, at least one sorting station and at least one distribution station are arranged at the workstation, so as to reduce the distance from the sorting point to the distribution point, thus improving the distribution efficiency and improving the sorting speed. Further, the movable carrier parking area is configured to bear the handling device of the movable carrier, and the container loading and unloading device is arranged in the movable carrier parking area, thus achieving the effect that the container can be moved between the distribution station or the sorting station and the movable carrier in the workstation through the container loading and unloading device arranged in the area after the handling device transports the movable carrier to the movable carrier parking area, and reducing the participation of the operator or automatic device in the sorting process and the distribution process. Through the mutual cooperation between the container loading and unloading device and the handling device, as well as the arrangement relationship between the sorting station and the distribution station, the sorting efficiency and distribution efficiency can be improved, and the consumption of human resources can be reduced to a very large extent at the same time.

It should be noted that in the method embodiment above, for the convenience of description, steps are expressed as a series of action combinations. However, those skilled in the art should understood that the present disclosure is not limited by the order of the described actions, as according to the present disclosure, certain steps may be performed in other orders or simultaneously. Further, those skilled in the art should also understood that the embodiments described in this specification are all preferred embodiments, and the actions and modules involved may not necessarily be necessary for the present disclosure.

In the above embodiments, the description of each embodiment has its own emphasis. For the parts that are not detailed in a certain embodiment, please refer to the relevant description of other embodiments.

The preferred embodiments of the present disclosure disclosed above are only intended to assist in describing the present disclosure. The optional embodiments do not fully describe all the details, nor do they limit the present disclosure to the specific implementations described. Apparently, many modifications and changes may be made according to the content of the present disclosure. The purpose of selecting and specifically describing these embodiments in the present disclosure is to better explain the principle and practical application of the present disclosure, so that those skilled in the art can better understand and utilize the present disclosure. The present disclosure is limited only by the claims and their full scope and equivalents.

## Claims

1. A warehousing system, comprising:
a workstation comprising at least one sorting station and at least one distribution station, the sorting station and the distribution station being configured to process a container;
a movable carrier parking area configured to park a handling device bearing a movable carrier and provided with a container loading and unloading device;
the handling device responsible for transporting the movable carrier to the movable carrier parking area, the movable carrier being configured to bear the container; and
the container loading and unloading device responsible for moving the container between the workstation and the movable carrier.

2. The system according to claim 1, wherein the movable carrier comprises at least one goods position, and the goods position is configured to store the container; and the container is a sorting container or an order container.

3. The system according to claim 1, wherein the movable carrier parking area comprises at least one movable carrier parking sub-area, and one container loading and unloading device corresponds to the at least one movable carrier parking sub-area.

4. The system according to claim 1, wherein the workstation comprises a guidance device, and the guidance device is configured to display information for guiding an operator or an automatic device.

5. The system according to claim 2, wherein the workstation comprises a temporary storage position, and the temporary storage position is configured to temporarily store the sorting container or the order container.

6. The system according to claim 2, wherein a substitution relationship is established between a target sorting container and a target order container; in a case that items contained in the target sorting container have the same attribute as items to be put into the target order container, the target sorting container is used as the target order container based on the substitution relationship; correspondingly, the sorting station corresponding to the target sorting container is switched to the distribution station.

7. The system according to claim 1, wherein the container loading and unloading device comprises a loading and unloading assembly, the loading and unloading assembly is responsible for moving the container between the sorting station/the distribution station and the movable carrier, moving the container between the goods positions of the movable carrier, moving the container between the movable carrier and a target movable carrier, moving the container between the sorting station and a docking port outside the workstation, moving the container between the distribution station and the docking port outside the workstation, or moving the container between the movable carrier and the docking port outside the workstation.

8. The system according to claim 1, wherein the sorting station is adjacent to the distribution station, and the sorting station and the distribution station are docked by at least one operator or automatic device.

9. A warehousing system, comprising a control terminal, at least one workstation, at least one movable carrier parking area, at least one handling device, at least one container loading and unloading device, and at least one movable carrier for storing a container, the workstation comprising at least one sorting station and at least one distribution station;
the control terminal being configured to, in a case that a sorting instruction is received, transmit a handling instruction to the handling device and a loading and unloading instruction to the container loading and unloading device according to the sorting instruction;
the handling device being configured to move to the movable carrier based on the handling instruction and to transport the movable carrier to the movable carrier parking area; and
the container loading and unloading device being configured to pick and place the container on at least one of the movable carrier, the sorting station, and the distribution station based on the loading and unloading instruction, and move the container between the movable carrier and the sorting station or the distribution station in the workstation.

10. The system according to claim 9, wherein in a case that the loading and unloading instruction is a sorting related loading and unloading instruction, the container loading and unloading device is further configured to determine coordinate information of a target goods position of the container on the movable carrier based on the sorting related loading and unloading instruction, pick and place the container based on the coordinate information of the target goods position, and place the container at the sorting station or the distribution station.

11. The system according to claim 10, wherein the container loading and unloading device is further configured to, in a case that a container placing-back instruction transmitted by the control terminal is received, pick and place the container placed at the sorting station or the distribution station according to the container placing-back instruction, and place the container at the target goods position on the movable carrier.

12. The system according to claim 9, wherein the container loading and unloading device is further configured to pick and place a container to be moved located at a temporary storage position in the workstation, and place the container to be moved at the sorting station, the distribution station, the movable carrier, or a docking port outside the workstation.

13. The system according to claim 9, wherein the control terminal is further configured to receive a station substitution instruction, and use the sorting station as the distribution station, or use the distribution station as the sorting station according to the station substitution instruction.

14. The system according to claim 9, wherein the container loading and unloading device is further configured to determine items in the container on the movable carrier through an identification device and/or according to an instruction transmitted by the control terminal, and use the container as a target order container and place the target order container at the distribution station, in a case that an attribute of the items is the same as an attribute of items to be sorted corresponding to the loading and unloading instruction.

15. The system according to claim 9, wherein the container loading and unloading device is further configured to determine items in a container at the sorting station through an identification device and/or according to an instruction transmitted by the control terminal, and use the container as a target order container and use the sorting station as the distribution station, in a case that an attribute of the items is the same as an attribute of items to be sorted corresponding to the loading and unloading instruction.

16. The system according to claim 9, wherein the container loading and unloading device is further configured to place the container at a temporary storage position contained in the workstation for queuing based on the loading and unloading instruction, in a case that it is determined through an identification device that the container is not placeable at the sorting station or the distribution station.

17. The system according to claim 9, wherein the handling device is further configured to generate a travel path based on movable carrier position information contained in the handling instruction, move to the movable carrier according to the travel path, and drive the movable carrier to move to the movable carrier parking area.

18. The system according to claim 17, wherein the handling device is further configured to transport the movable carrier back to a movable carrier parking position corresponding to the movable carrier position information, in a case that a sorting task corresponding to the sorting instruction is completed.

19. A sorting method, applied to a warehousing system according to any one of claims 1 to 8, and comprising:
receiving, by the control terminal, the sorting instruction, and driving, by the handling device, the movable carrier to move to the movable carrier parking area according to the handling instruction in the sorting instruction; and
picking and placing, by the container loading and unloading device, the container on at least one of the movable carrier, the sorting station, and the distribution station according to the loading and unloading instruction in the sorting instruction, and moving the container between the movable carrier and the sorting station or the distribution station in the workstation.
